(19) Europäisches Patentamt
European Patent Office
Office européen des brevets

(11) Veröffentlichungsnummer: **0 564 883 A1**

(12) **EUROPÄISCHE PATENTANMELDUNG**

(21) Anmeldenummer: **93104642.9**

(22) Anmeldetag: **22.03.93**

(51) Int. Cl.5: **C08G 59/16**, C08G 59/40, C09D 163/00

(30) Priorität: **30.03.92 DE 4210333**

(43) Veröffentlichungstag der Anmeldung:
**13.10.93 Patentblatt 93/41**

(84) Benannte Vertragsstaaten:
**AT BE DE ES FR GB IT NL SE**

(71) Anmelder: **HOECHST AKTIENGESELLSCHAFT**

**D-65926 Frankfurt(DE)**

(72) Erfinder: **Brindöpke, Gerhard, Dr.**
**Kaiser-Konrad-Weg 26**
**W-6231 Sulzbach/Ts.(DE)**

(54) **Flüssiges Beschichtungsmittel.**

(57) Flüssiges Beschichtungsmittel auf der Basis eines Acetoacetat-Gruppen enthaltenden Polymers und eines Polyamins in Form des entsprechenden Aldimins oder Ketimins wobei das Acetoacetat-Gruppen enthaltende Polymer durch Umsetzung eines hydroxylgruppenhaltigen Polyepoxids oder eines mit Monocarbonsäuren partiell oder vollständig umgesetzten Polyepoxids mit Acetessigsäurederivaten erhalten wird. Diese flüssigen Beschichtungsmittel eignen sich besonders als Bindemittel in Zwei-Komponenten Autoreparaturfüller oder als Zwei-Komponenten Grundiermittel.

EP 0 564 883 A1

Aus EP-0 199 087 und US 3,668,183 sind bereits Beschichtungsmittel bekannt, die als Bindemittelkomponente ein Acetoacetat-Gruppen enthaltendes Polymer und als Vernetzer ein Polyamin in Form des entsprechenden Aldimins oder Ketimins enthalten. Bei der Aushärtung dieser Zwei-Komponenten Systeme reagieren die Acetoacetat-Gruppen mit den Polyaminen unter Bildung von Enamin-Gruppen (Journal of Paint Technology, Vol. 46, No. 591, S. 70 - 76 und S. 76 - 81). Als Acetoacetat-Gruppen enthaltende Polymere sind solche bekannt, denen Polyole, Polythiole oder Polyamine zugrunde liegen (US 3 668 183). Die in EP 199 087 beschriebenen Acetoacetat-Gruppen enthaltenden Polymere sind solche, die durch Additionspolymerisation von ungesättigten Monomeren erhalten werden, wobei mindestens ein Monomer eine Hydroxylgruppe enthält. Diese Hydroxylgruppe in dem fertigen Polymer wird dann in die Acetoacetat-Gruppe überführt.

In der DE-4 032 751 sind flüssige Beschichtungsmittel auf der Basis eines Acetoacetat-Gruppen enthaltenden Polymers und eines Polyamins in Form des entsprechenden Aldimins oder Ketimins beschrieben, wobei das Acetoacetat-Gruppen enthaltende Polymer durch Umsetzung eines Polyepoxids mit Wasser, einem Amin oder einer Hydroxicarbonsäure und anschließende Veresterung oder Umesterung mit Acetessigsäurederivaten erhalten wird. In Weiterführung dieser Erfindung wurde nunmehr gefunden, daß man das Acetoacetat-Gruppen enthaltende Polymer auch auf einem Hydroxylgruppen enthaltenden Polyepoxid oder einem mit Monocarbonsäuren umgesetzten Polyepoxid aufbauen kann.

Gegenstand der vorliegenden Erfindung sind flüssige Beschichtungsmittel auf der Basis eines Acetoacetat-Gruppen enthaltenden Polymers und eines Polyamins in Form des entsprechenden Aldimins oder Ketimins, wobei das Acetoacetat-Gruppen enthaltende Polymer durch Umsetzung eines hydroxylgruppenhaltigen Polyepoxids oder eines mit Monocarbonsäuren partiell oder vollständig umgesetzten Polyepoxids mit Acetessigsäurederivaten erhalten wird. Die Umsetzung" mit den Acetessigsäurederivaten erfolgt als eine Veresterungs- oder Umesterungsreaktion.

Die Polyepoxide können sowohl gesättigt als auch ungesättigt sowie aliphatisch, cycloaliphatisch, aromatisch oder heterocyclisch sein. Sie können weiterhin solche Substituenten enthalten, die unter den Reaktionsbedingungen keine störenden Nebenreaktionen verursachen, beispielsweise Alkyl- oder Arylsubstituenten, Ethergruppierungen und ähnliche.

Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen (Epoxidharze) liegen zwischen 100 und 5000, vorzugsweise zwischen 160 und 4000. Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-ethan, Bis-(4-hydroxyphenyl)-1,1-isobutan, Bis-(4-hydroxy-tert.-butylphenyl)-2,2-propan, Bis-(2-hydroxynaphthyl)-methan, 1,5-Dihydroxynaphthalin, Tris-(4-hydroxyphenyl)-methan, Bis-(4-hydroxyphenyl)ether, Bis-(4-hydroxyphenyl)sulfon u.a. sowie die Chlorierungs- und Bromierungsprodukte der vorstehend genannten Verbindungen. Bisphenol A und Bisphenol F sind hierbei besonders bevorzugt.

Auch die Polyglycidylether von mehrwertigen Alkoholen sind geeignet. Als Beispiele derartiger mehrwertiger Alkohole seien Ethylenglykol, Diethylenglykol, Triethylenglykol, 1,2-Propylenglykol, Polyoxypropylenglykole (n = 1-10), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure erhält. Beispiele sind Adipinsäurediglycidylester, Phthalsäurediglycidylester und Hexahydrophthalsäurediglycidylester.

Diese Polyepoxidverbindungen können auch in Mischung untereinander sowie ggf. auch in Mischung mit Monoepoxiden eingesetzt werden. Als Monoepoxide sind beispielsweise geeignet: epoxidierte einfach-ungesättigte Kohlenwasserstoffe (Butylen-, Cyclohexen-, Styroloxid), Epoxidether einwertiger Phenole (Phenol, Kresol sowie andere in o- oder p-Stellung substituierte Phenole), Gylcidylester gesättigter und ungesättigter Carbonsäuren.

Des weiteren sind amid- oder urethangruppenhaltige Epoxide für die Umsetzung geeignet, z.B. Triglycidylisocyanurat oder glycidylverkapptes Hexamethylendiisocyanat.

Weitere geeignete Epoxidverbindungen leiten sich von ungesättigten Fettsäuren, beispielsweise von Linolsäuren oder Linolensäuren ab. Geeignete epoxidierte Fettsäurederivate sind z.B. solche von Leinöl, Sojaöl, Alkylestern der Ricinen-, Sojaöl, Linol-Fettsäure, Öl- oder Arachidonsäure, oligomeren Fettsäuren und deren Estern, ferner kommen epoxidierte mehrwertige Alkylester in Frage. Bevorzugt sind epoxidiertes Leinöl und Sojaöl.

Mischungen der genannten Epoxide können ebenfalls eingesetzt werden. Voraussetzung für alle Epoxide, soweit sie nicht ganz oder teilweise mit Monocarbonsäuren umgesetzt sind, die im Rahmen der vorliegenden Erfindung eingesetzt werden können, ist, daß sie Hydroxylgruppen enthalten.

Eine ausführliche Aufzählung der geeigneten Epoxidverbindungen findet sich in dem Handbuch "Epoxidverbindungen und Epoxidharze" von A.M. Paquin, Springer Verlag, Berlin 1958, Kapitel IV, in Lee, Neville "Handbook of Epoxy Resins", 1967, Chapter 2 und Wagner/Sarx, "Lackkunstharze", Carl Hanser Verlag (1971), S. 174 ff.

Die Polyepoxidverbindungen können sofern sie ausreichend Hydroxylgruppen besitzen als solche eingesetzt werden; jedoch ist es häufig vorteilhaft, einen Teil der reaktionsfähigen Epoxidgruppen mit einem modifizierenden Material umzusetzen, um die Filmeigenschaften zu verbessern.

Besonders bevorzugt sind plastifizierte Epoxidharze mit endständigen Epoxygruppen, die durch Teilumsetzung der Epoxygruppen von mindestens zwei Epoxygruppen enthaltenden Epoxidharzen mit OH- und COOH-haltigen Substanzen, wie mehrwertigen Alkoholen, z.B. den obengenannten Diolen oder Phenolen, Polycarbonsäuren oder Carboxyl- oder OH-gruppenhaltigen Polyestern oder durch Umsetzung mit Polyaminen hergestellt werden.

Als Hydroxyl-gruppen enthaltende Epoxide im Sinne der vorliegenden Erfindung kommen auch Umsetzungsprodukte infrage aus Verbindungen mit mindestens zwei 1,2-Epoxidgruppen pro Molekül und Epoxidäquivalentengewichten von 160 bis 600 und aromatischen Dicarbonsäuren oder deren Mischungen mit Verbindungen aus der Gruppe (cyclo)aliphatische Dicarbonsäuren, Monocarbonsäuren und/oder einwertige Phenole, und gegebenenfalls cyclischen Anhydriden. Produkte dieser Art sind in EP-0 387 692 beschrieben, auf die hier verwiesen wird. Für die Herstellung dieser Umsetzungsprodukte kommen alle eingangs genannten Epoxyverbindungen in Frage.

Als aromatische Dicarbonsäuren werden z.B. verwendet: Terephthalsäure, Isophthalsäure, o-Phthalsäure oder verschiedene Naphthalin-dicarbonsäuren, beispielsweise 2,6-Naphthalindicarbonsäure. Besonders bevorzugt ist dabei Terephthalsäure. Es können auch Gemische der aromatischen Dicarbonsäuren eingesetzt werden.

Weitere geeignete aromatische Carbonsäuren sind solche des Typs

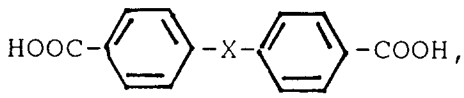

wobei X für eine chemische Bindung, für Alkylenreste mit 1 bis 6 C-Atomen, für O oder CO steht.

Der Begriff "(cyclo)aliphatische" Dicarbonsäuren soll entsprechende aliphatische oder cycloaliphatische Säuren sowie deren Gemische umfassen.

Als aliphatische Dicarbonsäuren, deren aliphatischer Rest im allgemeinen 1 bis 20, vorzugsweise 2 bis 12 C-Atome enthält, seien beispielsweise Bernsteinsäure, Glutarsäure, Adipinsäure, Korksäure, Azelainsäure, Sebacinsäure und Dodecandisäure genannt.

Geeignete cycloaliphatische Carbonsäuren, deren cycloaliphatischer Rest zumeist 5 bis 12, vorzugsweise 6 bis 8 C-Atome umfaßt, sind z.B. die verschiedenen Cyclohexandicarbonsäure-Isomeren, Hexahydrophthalsäure und Tetrahydrophthalsäure.

Geeignete Monocarbonsäuren, deren C-Zahl im allgemeinen 3 bis 20, vorzugsweise 3 bis 12 beträgt, sind z.B.: Benzoesäure, α- bzw. β-Naphthoesäure, o,m,p-Toluolsäure, Anissäure, Veratrumsäure; weiterhin verzweigte oder unverzweigte aliphatische Monocarbonsäuren, wie z.B. Essigsäure, Propionsäure, Buttersäure, Laurinsäure, Stearinsäure, Versaticsäure, Isooctansäure, Isononansäure, oder Hydroxymonocarbonsäuren, wie Glycolsäure, Milchsäure, Dimethylolpropionsäure.

Die einwertigen Phenole können ein- oder mehrkernig sein. Beispielsweise seien hier genannt: Phenol, o,m,p-Kresol, Xylenole, Guajakol, Thymol, Carvacrol, α- oder β-Napthol, p-Butylphenol udgl..

Falls die Säure-Komponente eine Mischung aus aromatischer Dicarbonsäure mit (cyclo)aliphatischen Dicarbonsäuren, Monocarbonsäuren und/oder aromatischen Alkoholen darstellt, so beträgt die Menge dieser neben der aromatischen Dicarbonsäure vorhandenen Bestandteile zumeist 0,1 bis 20 Gew.-%, vorzugsweise 1 bis 5 Gew.-%, bezogen auf aromatische Dicarbonsäure.

Die Epoxy- und die Säure-Komponenten werden üblicherweise in solchen Mengen eingesetzt, daß das Äquivalentverhältnis Epoxid- zu Carboxylgruppen 6 : 5 bis 2 : 1, vorzugsweise 3 : 2 bis 2 : 1 beträgt. Bei Mitverwendung von cyclischen Anhydriden werden pro mol Reaktionsprodukt aus Epoxy- und Säure-Komponente im allgemeinen 0,01-1 Mol, vorzugsweise 0,1-0,4 mol cyclisches Anhydrid verwendet.

Als cyclisches Polycarbonsäureanhydrid kommen zweckmäßigerweise solche in Frage, die 4 bis 20, vorzugsweise 4 bis 10 C-Atome aufweisen, und die gegebenenfalls noch Substituenten, wie Halogen, insbesondere Chlor, sowie Carboxylgruppen tragen können. Sie können sich von (cyclo)-aliphatischen, olefinisch ungesättigten oder aromatischen Polycarbonsäuren ableiten. Beispielsweise seien hier genannt: Bernsteinsäureanhydrid, Alkylenbernsteinsäureanhydride wie z.B. Dodecenylbernsteinsäureanhydrid, Glutarsäureanhydrid, Maleinsäureanhydrid oder Citraconsäureanhydrid.

Das Molekulargewicht (Gewichtsmittel) sämtlicher Epoxide, die den erfindungsgemäßen Beschichtungsmitteln zugrunde liegen, bestimmt mittels Gelchromatographie (Polystyrolstandard), liegt üblicherweise im Bereich von etwa 300 bis etwa 50 000, vorzugsweise etwa 300 bis etwa 30 000.

Die erfindungsgemäßen Epoxide oder mit Monocarbonsäuren modifizierten Epoxide besitzen Hydroxylzahlen von 20 - 600, insbesondere 50 - 400.

Diese Epoxidverbindungen können, sofern sie ausreichend Hydroxylgruppen besitzen, direkt mit Acetessigsäurederivaten umgesetzt werden; andernfalls werden sie zuvor mit den obengenannten Monocarbonsäuren partiell oder vollständig unter Öffnung der Epoxidgruppe verestert werden, so daß hydroxylgruppenhaltige Produkte entstehen, die erst anschließend der Umsetzung mit den Acetessigsäurederivaten unterworfen werden.

Die anschließende Veresterung der Hydroxylgruppen des hydroxylgruppenhaltigen Epoxid- bzw. Epoxid-Säureadduktes zu Acetoacetaten erfolgt in der Regel durch Umsetzung mit monomeren Acetessigsäureestern wie z.B. Acetessigsäure-methyl-, -ethyl- oder -t-butylester. Der Veresterungsgrad der Hydroxylgruppen kann dabei in einem weiten Bereich, je nach gewünschten Eigenschaften des Endproduktes, verändert werden.

Die Umesterung erfolgt in der Art, daß man beide Komponenten miteinander zum Sieden erhitzt und dabei den sich bildenden tiefer siedenden Alkohol langsam, gegebenenfalls im Vakuum abdestilliert.

Bevorzugt wird man aus Kostengründen eine stöchiometrische und quantitative Umsetzung bezüglich der Acetessigestermenge anstreben.

Die Veresterung der Hydroxylgruppen kann aber auch mit Acetessigsäureäquivalenten wie z.B. Diketen oder 2,2,6-Trimethyl-1,3-dioxan-4-on erfolgen.

Die Umsetzung erfolgt hierbei in Lösung oder in Substanz bei Temperaturen zwischen RT und 150 °C, wenn erforderlich kann auch noch ein zusätzlicher Katalysator verwendet werden.

Die so erhaltene Bindemittelkomponente in Form des Acetoacetat-Gruppen enthaltenden Polymers wird mit einem Härter in Form eines blockierten Polyamins vermischt. Dabei beträgt das Molverhältnis von blockierten Polyaminen zu dem Acetoacetat-Gruppen enthaltenden Polymer 0,5 : 1,5, insbesondere 1 bis 1,5 :1.

Als Beispiele für typische Polyamine, die erfindungsgemäß in Form ihrer Aldimine oder Ketimine als zweite Komponente benutzt werden können, seien aliphatische, aromatische oder cycloaliphatische Amine mit 2 - 10 primären und/oder sekundären Aminogruppen, vorzugsweise 2 - 4 primären Aminogruppen und 2 - 200 Kohlenstoffatomen erwähnt.

Beispiele für geeignete Polyamine sind Ethylendiamin, Propylendiamin, Butylendiamin, Pentaethylendiamin, 2-Methylpentamethylendiamin, Trimethylhexamethylendiamin, Hexamethylendiamin, Decamethylendiamin, 4,7-Dioxadecan-1,10-diamin, Dodecamethylendiamin, 4,9-Dioxadodecan-1,12-diamin, 7-Methyl-4,10-dioxatridecan-1,13-diamin, 1,2-diaminocyclohexan, 1,4-Diaminocyclohexan, 4,4'-Diaminodicyclohexyl-methan, Isophorondiamin, Bis(3-methyl-4-aminocyclohexyl)methan, 2,2-Bis(4-aminocyclohexyl)propan, Nitriltris-(ethan-amin), Bis(3-aminopropyl)methylamin, 3-Amino-1-(methylamino)propan, 3-Amino-1-(cyclohexylamino)propan, N-(2-hydroxyethyl)ethylen-diamin und Polyamine der Formel $H_2N-(R_2-NH)_n-R_1-NH_2$, worin die Gruppe $R_1$ und die n Gruppen $R_2$ gleich sind oder verschieden und eine Alkylgruppe darstellen, die 2 - 6, vorzugsweise 2 - 4 Kohlenstoffatome enthält und n eine Zahl ist von 1 - 16, vorzugsweise von 1 - 3. Unter einer Alkylgruppe wird hier auch eine Cycloalkylgruppe oder eine ein Ethersauerstoffatom enthaltende Alkylgruppe verstanden. Beispiele für geeignete Polyalkylpolyamine sind Diethylentriamin, Dipropylentriamin, Dibutylentriamin und Bishexamethylentriamin. Diese Polyamine enthalten bevorzugt 5 - 15 Kohlenstoffatome.

Weitere geeignete erfindungsgemäße Polyamine sind die Addukte von Aminoverbindungen oder Polyaminen der oben beschriebenen Art an ein mehrwertiges Epoxid, Isocyanat, Maleinat, Fumarat oder an eine Acryloylverbindung bzw. Methacryloylverbindung.

Als Beispiele für geeignete Epoxyverbindungen, die fest oder flüssig sein können, seien die Di- oder Polyglycidylether der (Cyclo)aliphatischen oder aromatischen Hydroxylverbindungen genannt, wie Ethylenglykol, Glycerol, Cyclohexandiol (oder die Epoxide wie eingangs erwähnt), cycloaliphatische Epoxyverbindungen wie epoxidiertes Styrol oder Divinylbenzol, die anschließend hydriert sein können; Glycidylester von Fettsäuren, die beispielsweise 6 - 24 Kohlenstoffatome enthalten; Glycidyl(meth)acrylat; Epoxyverbindungen, die eine Isocyanuratgruppe enthalten; ein epoxidiertes Polyalkadien wie beispielsweise epoxidiertes Polybutadien; Hydantoin-Epoxyharze; Epoxyharze erhalten durch Epoxidierung aliphatischer und/oder cycloaliphatischer Alkene, wie beispielsweise Dipentendioxid, Dicyclopentadiendioxid und Vinylcyclohexendioxid, und Glycidylgruppen enthaltende Harze, beispielsweise Polyester oder Polyurethane, die ein oder mehrere Glycidylgruppen pro Molekül enthalten, oder Gemische der oben dargestellten Epoxyharze. Die Epoxyharze sind dem Fachmann bekannt und müssen hier nicht näher beschrieben werden.

Die Epoxidharze sollten vorzugsweise ein Diglycidylether auf der Grundlage eines Bis(4-hydroxyphenyl)-2,2-propans sein. Das bevorzugte Epoxyäquivalenzgewicht der Epoxyharze liegt im Bereich von 87 - 6000, vorzugsweise 120-1000.

Beispiele für geeignete Isocyanatverbindungen sind: Polyisocyanate wie Tetramethylendiisocyanat, Hexamethylendiisocyanat, 2,2,4-Trimethylhexamethylendiisocyanat, 1,12-Dodecandiisocyanat, Cyclohexan-1,3- und 1,4-diisocyanat, 1-Isocyanato-3,3,5-trimethyl-5-isocyanatomethylcyclohexan (=Isophorondiisocyanat, IPDI), Perhydro-2,4'- und/oder - 4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4'-Diisocyanato-4-methyl-diphenylmethan, Naphthylen-1,5-diisocyanat, Triphenylmethan-4,4',4,''-triisocyanat oder Gemische dieser Verbindungen.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut geeignet sind die bekannten Polyisocyanate, die hauptsächlich bei der Herstellung von Lacken eingesetzt werden z.B. Biuret-, Isocyanurat- oder Urethangruppen-aufweisende Modifizierungsprodukte der obengenannten einfachen Polyisocyanate, insbesondere Tris-(6-Isocyanatohexyl)biuret oder niedermolekulare, Urethangruppen-aufweisende Polyisocyanate, wie sie durch Umsetzung von im Überschuß eingesetztem IPDI mit einfachen mehrwertigen Alkoholen des Molekulargewichtsbereiches 62-300, insbesondere mit Trimethylolpropan erhalten werden können. Selbstverständlich können auch beliebige Gemische der genannten Polyisocyanate eingesetzt werden.

Geeignete Polyisocyanate sind ferner die bekannten, endständige Isocyanatgruppen aufweisende Präpolymere, wie sie insbesondere durch Umsetzung der obengenannten einfachen Polyisocyanate, vor allem Diisocyanate mit unterschüssigen Mengen an organischen Verbindungen mit mindestens zwei gegenüber Isocyanatgruppen reaktionsfähigen Gruppen zugänglich sind. Als solche kommen insbesondere insgesamt mindestens zwei Aminogruppen und/oder Hydroxylgruppen aufweisende Verbindungen des Molekulargewichtsbereiches 300 bis 10 000, vorzugsweise 400 bis 6 000 zur Anwendung. Bevorzugt werden die entsprechenden Polyhydroxylverbindungen, z.B. die in der Polyurethanchemie an sich bekannten Hydroxypolyester, Hydroxypolyether und/oder hydroxylgruppenhaltigen Acrylatharze verwendet.

In diesen bekannten Präpolymeren entspricht das Verhältnis von Isocyanatgruppen zu gegenüber NCO reaktiven Wasserstoffatomen 1,05 bis 10 : 1, vorzugsweise 1,1 bis 3 : 1, wobei die Wasserstoffatome vorzugsweise aus Hydroxylgruppen stammen.

Beispiele für geeignete polyfunktionelle Acryloylverbindungen oder Methacryloylverbindungen beinhalten die (Meth)acrylester von Di-, Tri- oder Poly-Hydroxyverbindungen, einschließlich Polyesterdiolen oder -Polyole und Polyetherdiole oder -Polyole; Addukte eines Hydroxylgruppenhaltigen (Meth)acrylesters eines Polyols zu einer mindestens bifunktionellen Isocyanatverbindung oder Epoxyverbindung; und Addukte von (Meth)acrylsäuren zu einer mindestens bifunktionellen Epoxyverbindung. Die Verbindungen, die hier in Betracht kommen, werden hier abgekürzt als Poly(meth)acryloylverbindungen bezeichnet. Als Beispiele für geeignete (Meth)acrylester der Di-, Tri- oder Poly-Hydroxylverbindungen seien erwähnt Ethylenglykol, Propylenglykol, Diethylenglykol, Tetramethylendiol, Neopentylglykol, Hexamethylendiol, Cyclohexandiol, 4,4'-Dihydroxybenzophenon, Bis-(4-hydroxycyclohexyl)methan, Glycerol, Trimethylolpropan und Pentaerythrit. Diese Ester enthalten vorzugsweise eine Hydroxylgruppe. Die Hydroxylgruppen enthaltenden (Meth)-acrylester, aus denen das Addukt zu der mindestens bifunktionellen Isocyanatverbindung oder Epoxyverbindung gebildet werden kann, sind die (Meth)acrylester der Polyole, wie oben bereits erwähnt. Als Beispiele für eine mindestens bifunktionelle Isocyanat- oder Epoxyverbindung, geeignet zur Bildung des oben erwähnten Adduktes, seien jene Isocyanat- und Epoxyverbindungen erwähnt, die bereits als Komponente des Adduktes einer Aminoverbindung zu einer polyfunktionellen Isocyanat- oder Epoxyverbindung genannt

wurden. Die Poly(meth)acryloylverbindung hat üblicherweise ein Äquivalenzgewicht von 85 - 5000, vorzugsweise 100 - 1000.

Die Aminogruppen der oben beschriebenen Polyamine sind zur Verwendung in dem erfindungsgemäßen Beschichtungsmittel blockiert durch ein Aldehyd oder Keton mit nicht mehr als 18 Kohlenstoffatomen, vorzugsweise 3 - 10 Kohlenstoffatomen. Beispiele für geeignete Blockierungsreagentien sind Aceton, Diethylketon, Methylisopropylketon, Diisobutylketon, Methyl-t-butylketon, Methylisobutylketon, Methylethylketon, Isobutyraldehyd, Hydroxybutyraldehyd, Pentanon, Cyclohexanon, Ethylamylketon, Hydroxycitronellal, Isophoron und Decanon. Vorzugsweise sollte ein aliphatisches oder cycloaliphatisches Keton mit 3 - 12 Kohlenstoffatomen benutzt werden. Das Blockieren der Aminogruppen ist bekannt und muß nicht näher beschrieben werden. Die blockierten Polyamine haben üblicherweise ein durchschnittliches Molekulargewicht von 250 - 4000, vorzugsweise 300 - 2000.

Die erfindungsgemäßen härtbaren flüssigen Beschichtungsmittel können gegebenenfalls ein Verdünnungsmittel wie übliche inerte organische Lösungsmittel enthalten. Beispielsweise seien hier genannt: halogenierte Kohlenwasserstoffe, Ether, wie Diethylether, 1,2-Dimethoxyethan, Tetrahydrofuran oder Dioxan; Ketone, wie beispielsweise Methylethylketon, Aceton, Cyclohexanon und ähnliche; Alkohole, wie Methanol, Äthanol, Propanol, Methoxypropanol, Butanol und Benzylalkohol, (cyclo)aliphatische und/oder aromatische Lösemittel im Siedebereich von ca. 150 bis 180 °C (höhersiedende Mineralölfraktionen, wie $^R$Solvesso) oder Ester wie Butylacetat. Die Lösemittel können dabei einzeln oder im Gemisch eingesetzt werden.

Als übliche Zusatzstoffe, die eventuell in den erfindungsgemäßen flüssigen Beschichtungsmitteln vorhanden sein können, seien hier - in Abhängigkeit von dem jeweiligen Verwendungszweck - die üblichen Lackadditive wie Pigmente, Pigmentpasten, Antioxidantien, Verlaufs- bzw. Verdickungsmittel, Rheologiehilfsmittel, Entschäumer und/oder Netzmittel, Füllstoffe, Katalysatoren, zusätzliche Härter und zusätzliche härtbare Verbindungen udgl. genannt. Diese Additive können der Mischung gegebenenfalls erst unmittelbar vor der Verarbeitung zugegeben werden.

Die erfindungsgemäßen Mischungen können wegen ihrer günstigen Eigenschaften - vor allem der raschen Aushärtung auch bei tiefen Temperaturen - eine vielseitige technische Anwendung finden, z.B. zur Herstellung von Formkörpern (Gießharze) für den Werkzeugbau oder zur Herstellung von Überzügen und/oder Zwischenbeschichtungen auf vielerlei Substraten, z.B. auf solchen organischer oder anorganischer Natur, wie z.B. Holz, Textilien, Kunststoffe, Glas, Keramik, Baustoffe, insbesondere jedoch auf Metall. Weiterhin können die erfindungsgemäßen Mischungen als Bestandteile von Anstrichmitteln und Lacken zum Beschichten von Industriegegenständen, Haushaltsgeräten, wie z.B. Kühlgeräten, Waschmaschinen, Elektrogeräten, Fenstern, und Türen eingesetzt werden. Das Aufbringen kann beispielsweise durch Streichen, Sprühen, Tauchen , Spritzen udgl. erfolgen.

Ein bevorzugtes Anwendungsgebiet für die erfindungsgemäßen Mischungen sind die Lackzubereitungen.

Die Härtung der erfindungsgemäßen Mischungen läuft sehr rasch ab und erfolgt im allgemeinen bei -10 bis 150 °C, vorzugsweise 0 bis 140 °C.

Die Härtungsreaktion läßt sich in einer Stufe durchführen, indem man beispielsweise mit äquivalenten Anteilen der Komponenten arbeitet. Die Topfzeit und die Eigenschaften des Produktes hängen daher von den Verfahrensbedingungen, d.h. von der Art und der Menge der Ausgangsstoffe, der Temperaturführung etc. ab. So läßt sich die Elastizität des vernetzten Produktes innerhalb eines Toleranzbereiches z.B. durch die Kettenlänge der eingesetzten Oligomere und/oder Polymere steuern. Obwohl die Härtung in der Regel diskontinuierlich betrieben wird, liegt es auch im Rahmen der Erfindung, das Vermischen der Komponenten und den Reaktionsverlauf kontinuierlich durchzuführen, beispielsweise mittels einer automatischen Lackiervorrichtung.

Die zuvor beschriebenen Bindemittel besitzen überraschender Weise, obwohl sie in ihren Molekulargewichten und in ihren Funktionalitäten vergleichbar mit den Bindemitteln der EP 199 087 (Vergleichsbeispiel ist Beispiel G; $M_n$ 3400, EW 960, rechnerische Funktionalität: 5,9) sind, eine höhere Reaktivität, die sich in der kürzeren Gelzeit und in der besseren Lösungsmittelfestigkeit zeigt. Aus der Literatur (XIX. Fatipec-Kongress, 1988 Band III, S. 137 ff.) ist be kannt, daß Carbonsäuren die Vernetzungsreaktion beschleunigen; es ist deshalb überraschend, daß in dem vorliegenden Fall, obwohl diese Bindemittel Aminogruppen enthalten, die das Gesamtsystem basischer machen, eine beschleunigte Reaktion beobachtet wird.

Die erhaltenen Überzüge zeichnen sich daneben durch bessere Lösungsmittelbeständigkeiten (der Lackfilm ist früher nachbearbeitbar) und durch größere Elastizitäten aus (Erichsen-Tiefung).

**Herstellung der Bindemittelkomponente A:**

**Beispiel A1:**

940 Teile Beckopox EP 304 (Handelsname der Hoechst AG für einen Diglycidylether auf Basis Bisphenol A, Epoxidgehalt: ca. 1,8 %) und 118 Teile Xylol wurden in einem 41-Vierhalskolben, der mit Rührer, Thermometer, Rückflußkühler und Tropftrichter bestückt war, unter Stickstoff auf 110 °C erhitzt.

Nach Zugabe von 0,7 Teilen Triethanolamin wurden dann binnen 30 min bei gleicher Temperatur 156 Teile Versaticsäure (Handelsname der Fa. Shell für eine alpha-Stellung verzweigte Monocarbonsäure, Säurezahl: ca. 326 mgKOH/g) zugetropft. Anschließend wurde bei 140 °C nachgerührt bis eine Säurezahl < 1 erreicht war. Im Wasserstrahlvakuum wurde das Lösungsmittel abdestilliert und anschließend in 500 Teilen Acetessigsäureethylester aufgenommen.

Danach wurde 3 h lang zum Rückfluß erhitzt; anschließend wurden binnen 3 h, anfangs bei Normaldruck dann im Vakuum, bis zu einer Sumpftemperatur von 150 °C die flüchtigen Bestandteile abdestilliert. Bei gleicher Temperatur wurden dann durch Einleiten von Wasserdampf die letzten Reste an nicht umgesetztem Acetessigester entfernt.

Der Rückstand wurde in Butylacetat gelöst und auf einen Feststoffgehalt von 60 % verdünnt. Man erhielt eine gelbe Harzlösung mit einem Äquivalentgewicht von ca. 1200 g/mol und einer Viskosität von 1100 mPa.s (mittleres Molekulargewicht $M_n$ = 3300).

**Beispiel A2:**

705 Teile Beckopox EP 304 (Handelsname der Hoechst AG für einen Diglycidylether auf Basis Bisphenol A, Epoxidgehalt: ca. 1,8 %) und 465 Teile Acetessigsäureethylester wurden in einem 41-Vierhalskolben, der mit Rührer, Thermometer, Rückflußkühler und Tropftrichter bestückt war, unter Stickstoff für 3 h zum Rückfluß erhitzt.

Anschließend wurden binnen 3 h, anfangs bei Normaldruck dann im Vakuum, bis zu einer Sumpftemperatur von 150 °C die flüchtigen Bestandteile abdestilliert. Durch Einleiten von Wasserdampf wurden dann die letzten Reste an nicht umgesetztem Acetessigester entfernt.

Der Rückstand wurde in Butylacetat gelöst und auf einen Feststoffgehalt von ca. 60 % verdünnt. Man erhielt eine gelbe Harzlösung mit einem Äquivalentgewicht von ca. 1400 g/mol und einer Viskosität von 1300 mPa.s und einem Epoxidgehalt von 0,8 % (mittleres Molekulargewicht $M_n$ = 2495).

**Beispiel A3:**

1048 Teile Beckopox EP 303 (Handelsname der Hoechst AG für einen Diglycidylether auf Basis Bisphenol A, Epoxidgehalt: ca. 2,2 %) und 692 Teile Acetessigsäureethylester wurden in einem 41-Vierhalskolben, der mit Rührer, Thermometer, Rückflußkühler und Tropftrichter bestückt war, unter Stickstoff für 3 h zum Rückfluß erhitzt.

Anschließend wurden binnen 3 h, anfangs bei Normaldruck dann im Vakuum, bis zu einer Sumpftemperatur von 150 °C die flüchtigen Bestandteile abdestilliert. Durch Einleiten von Wasserdampf wurden dann die letzten Reste an nicht umgesetztem Acetessigester entfernt.

Der Rückstand wurde in Butylacetat gelöst und auf einen Feststoffgehalt von ca. 60 % verdünnt. Man erhielt eine gelbe Harzlösung mit einem Äquivalentgewicht von ca. 1600 g/mol und einer Viskosität von 1100 mPa.s (mittleres Molekulargewicht $M_n$ = 2215).

**Beispiel A4:**

560 Teile Beckopox EP 307 (Handelsname der Hoechst AG für einen Diglycidylether auf Basis Bisphenol A, Epoxidgehalt: ca. 0,9 %) und 390 Teile Acetessigsäureethylester wurden in einem 41-Vierhalskolben, der mit Rührer, Thermometer, Rückflußkühler und Tropftrichter bestückt war, unter Stickstoff für 3 h zum Rückfluß erhitzt.

Anschließend wurden binnen 3 h, anfangs bei Normaldruck dann im Vakuum, bis zu einer Sumpftemperatur von 150 °C die flüchtigen Bestandteile abdestilliert. Durch Einleiten von Wasserdampf wurden dann die letzten Reste an nicht umgesetztem Acetessigester entfernt.

Der Rückstand wurde in Butylacetat gelöst und auf einen Feststoffgehalt von ca. 60 % verdünnt. Man erhielt eine gelbe Harzlösung mit einem Äquivalentgewicht von ca. 1200 g/mol und einer Viskosität von 4500 mPa.s (mittleres Molekulargewicht $M_n$ = 4160).

**Herstellung der Härterkomponente B:**

**Beispiel B1:**

206 Teile Diethylentriamin, 440 Teile Methylisobutylketon, 162 Teile Xylol und 2,6 Teile Ameisensäure wurden in einem 2-l Vierhalskolben, der mit Rückflußkühler, Rührer und Wasserabscheider bestückt war, zum Rückfluß erhitzt. Nach Abscheiden von ca. 72 ml Wasser wurde auf 85 °C abgekühlt und binnen 30 min mit 397 Teilen Beckopox EP 140 (Handelsname der Hoechst AG für einen Diglycidylether auf Basis Bisphenol A, Epoxidgehalt: ca. 8,6 %) versetzt. Nach Erreichen eines Epoxidgehaltes von <0,5 % wurde mit 99 Teilen Xylol auf einen Feststoffgehalt von 75 % eingestellt. Man erhält eine hellgelbe Harzlösung, die eine Viskosität von 620 mPa.s und einen Amingehalt von 6,9 % besitzt.

**Herstellung der Grundierlacke:**

Entsprechend den Mengenverhältnissen in der folgenden Tabelle wurden die erfindungsgemäßen und ein Vergleichsbindemittel aus der EP 0 199 087 mit der Pigmentmischung, den Additiven und dem Lösungsmittel gemischt und vermahlen.

Die in den Beispielen angeführte Pigmentierung besteht aus 100 Teilen Kaolin, 100 Teilen Blanc fixe 50 Teilen Titandioxyd und 50 Teilen Talkum.

Bentone 10 % ist eine Aufschlämmung in Xylol; Additol XL 270 ist eine Handelsbezeichnung der Hoechst AG für ein handelsübliches Antiabsetzmittel.

Vergleichsbeispiel entspricht dem Beispiel G aus EP 0 199 087.

**Verarbeitung:**

100 Teile des obigen Lackes wurden mit der angegebenen Härtermenge versetzt und mit Butylacetat auf Spritzviskosität verdünnt. Der so erhaltene spritzfertige Lack wurde auf entfettete und gereinigte Prüfbleche appliziert. Nach Trocknung bei Raumtemperatur wurde nach 4 h die Schleifbarkeit und die Beständigkeit gegen Benzin und Butylacetat geprüft.

**Anwendungstechnische Ausprüfung und Vergleich**

| Beispiele | | 1 | 2 | 3 | Vergleich |
|---|---|---|---|---|---|
| Bindemittel-komponente | A1 | 125 | | | |
| | A2 | | 125 | | |
| | A3 | | | 125 | |
| | Vergleich | | | | 125 |
| Pigmentmischung | | 300 | 300 | 300 | 300 |
| Bentone (10% in Xylol) | | 17,5 | 17,5 | 17,5 | 17,5 |
| Additol XL 270 | | 3,5 | 3,5 | 3,5 | 3,5 |
| Butylacetat | | 155 | 155 | 155 | 155 |
| Härter B1/ 100 Lack | | 7 | 7,1 | 6,3 | 6,3 |

Ergebnisse:

| | | 1 | 2 | 3 | Vergleich |
|---|---|---|---|---|---|
| Gelzeit (min): | | 105 | 90 | 100 | 120 |
| Schleifbarkeit: | | 2 | 1-2 | 2 | 2 |
| Beständigkeit* gegen | | | | | |
| Benzin** | n.4 h: | 2 | 2 | 2 | 3 |
| Butylacetat** | n.4 h: | 3 | 2 | 2-3 | 4 |
| destilliertes Wasser*** | n.10 Tg: | 1 | 1 | 1 | 1 |
| Natron-lauge 10%*** | n.10 Tg: | 1 | 1 | 1 | 1 |
| Erichsen Tiefung (mm) | | 7,0 | 6,8 | 6,0 | 2,5 |

* visuelle Beurteilung, 0 = sehr gut
** Einwirkdauer 30 sec
*** Einwirkdauer 12 h

## Patentansprüche

1. Flüssiges Beschichtungsmittel auf der Basis eines Acetoacetat-Gruppen enthaltenden Polymers und eines Polyamins in Form des entsprechenden Aldimins oder Ketimins, dadurch gekennzeichnet, daß das Acetoacetat-Gruppen enthaltende Polymer durch Umsetzung eines hydroxylgruppenhaltigen Polyepoxids oder eines mit Monocarbonsäuren partiell oder vollständig umgesetzten Polyepoxids mit Acetessigsäurederivaten erhalten wird.

2. Flüssiges Beschichtungsmittel nach Anspruch 1, dadurch gekennzeichnet, daß das Polyepoxid auf Bisphenol A und/oder Bisphenol F aufgebaut ist.

3. Flüssiges Beschichtungsmittel nach Anspruch 1, dadurch gekennzeichnet, daß das Polyepoxid mit Polyalkoholen, Polycarbonsäuren oder Polyaminen modifiziert ist.

4. Flüssiges Beschichtungsmittel nach Anspruch 1, dadurch gekennzeichnet, daß das Polyepoxid ein mit Polyalkoholen, Polycarbonsäuren oder Polyaminen modifiziertes Polyepoxid auf der Basis von Bisphenol A und/oder Bisphenol F ist.

5. Flüssiges Beschichtungsmittel nach Anspruch 1, dadurch gekennzeichnet, daß das Polyepoxid mit Laurinsäure, Stearinsäure, Versaticsäure oder Ethylhexansäure umgesetzt ist.

6. Flüssiges Beschichtungsmittel nach Anspruch 1, dadurch gekennzeichnet, daß das Polyamin, in Form des entsprechenden Aldimins oder Ketimins, ein Umsetzungsprodukt eines Polyamins mit einem Epoxid oder einem Polyisocyanat ist.

7. Flüssiges Beschichtungsmittel nach Anspruch 1, dadurch gekennzeichnet, daß das Polyamin in Form des entsprechenden Aldimins oder Ketimins, ein Umsetzungsprodukt eines Polyamins mit einem Polyepoxid auf der Basis von Bisphenol A und/oder Bisphenol F ist.

8. Flüssiges Beschichtungsmittel nach Anspruch 1, dadurch gekennzeichnet, daß das Polyamin, in Form des entsprechenden Aldimins oder Ketimins, eine Verbindung der Formel

$$H_2N\text{-}(R_2\text{-}NH)_n\text{-}R_1\text{-}NH_2$$

ist, wobei $R_1$ und $R_2$ gleich oder verschieden sind und $C_2$-$C_6$-Alkyl und n eine Zahl von 1 bis 16 bedeutet.

9. Flüssiges Beschichtungsmittel nach Anspruch 1, dadurch gekennzeichnet, daß das Polyepoxid ein Molekulargewicht von 300 bis 50 000 hat.

10. Verwendung der flüssigen Beschichtungsmittel nach Anspruch 1 zum Beschichten von Substraten.

11. Verwendung der flüssigen Beschichtungsmittel nach Anspruch 1 als Zwei-Komponenten Autoreparaturfüller oder als Zwei-Komponenten Grundiermaterial.

Europäisches Patentamt

# EUROPÄISCHER RECHERCHENBERICHT

Nummer der Anmeldung

EP 93 10 4642

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
| D,P, Y | EP-A-0 481 345 (HOECHST AKTIENGESELLSCHAFT) * Ansprüche * --- | 1-11 | C08G59/16 C08G59/40 C09D163/00 |
| Y | DE-A-2 621 423 (HULS) * Ansprüche * --- | 1-11 | |
| A | US-A-5 021 537 (C.J. STARK, E.A.) * Ansprüche * --- | 1 | |
| A | GB-A-873 252 (UNION CARBIDE CORP.) * Ansprüche * --- | 1 | |
| A | DATABASE WPIL Derwent Publications Ltd., London, GB; AN 88-276401 (RD292099 ANONYMOUS) 10. August 1988 * Zusammenfassung * ----- | 1 | |
| | | | RECHERCHIERTE SACHGEBIETE (Int. Cl.5 ) |
| | | | C08G |

Der vorliegende Recherchenbericht wurde für alle Patentansprüche erstellt

| Recherchenort | Abschlußdatum der Recherche | Prüfer |
|---|---|---|
| DEN HAAG | 19 MAI 1993 | DERAEDT |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)